# EUROPÄISCHE PATENTANMELDUNG

(11) **EP 1 146 702 A2**
(43) Veröffentlichungstag der Anmeldung: **17.10.2001**
(21) Anmeldenummer: 01107277.4
(22) Anmeldetag: 23.03.2001
(51) Int. Cl.: H04L 12/64

(54) **Kommunikationsvorrichtung und Kommunikationssystem zum integrierten Übertragen von ersten Daten mit Echtzeitanforderung und zweiten Daten ohne Echtzeitanforderung**

(30) Priorität: 10.04.2000 DE 10017766
(71) Anmelder: SIEMENS AKTIENGESELLSCHAFT, 80333 München (DE)
(72) Erfinder: Decker, Hendrik, Dr., 80799 München (DE); Krautgärtner, Michael, Dr., 80538 München (DE)

(57) **Zusammenfassung**

Zur Übertragung der ersten Daten ist eine Mehrzahl von ersten Dienstgüteklassen und zur Übertragung der zweiten Daten eine Mehrzahl von zweiten Dienstgüteklassen jeweils in der Anwendungsschicht vorgesehen. Es wird aus den ersten Dienstgüteklassen und den zweiten Dienstgüteklassen gebildeten Kombinationsdienstgüteklassen eine Kombinationsdienstgüteklasse ausgewählt. Die ersten Daten und die zweiten Daten werden abhängig von der ausgewählten Kombinationsdienstgüteklasse zugeordneten Übertragungsparametern einer Einheit der Transportschicht zugeführt, mittels der die Daten übertragen werden.

## Beschreibung

Die Erfindung betrifft ein Verfahren zum **integrierten** Übertragen von ersten Daten mit Echtzeitanforderung und zweiten Daten ohne Echtzeitanforderung, eine Kommunikationsvorrichtung sowie ein Kommunikationssystem.

Aus **[**1**]** ist das von der **I**nternational **O**rganization for **S**tandardization (ISO) definierte **O**pen **S**ystem **I**nterconnection (OSI)-Schichtenmodell bekannt. Im Rahmen dieses OSI-Schichtenmodells sind die unterschiedlichen Aufgaben, die im Rahmen einer Übertragung von Daten zwischen Computern, allgemein einer Kommunikation zwischen Computern in einem heterogenen Kommunikationsnetz bestehen, auf unterschiedliche Schichten aufgeteilt, die jeweils vorgegebene Dienste transparent zur Verfügung stellen, das heißt, es werden von einer Einheit in der jeweiligen Schicht einer Einheit einer "darüberliegenden Schicht" derart zur Verfügung gestellt, dass es für die darüberliegenden Schichten nicht ersichtlich ist, wie der jeweilige Dienst erbracht wird, sondern lediglich, dass der jeweilige Dienst erbracht wird.

In dem OSI-Schichtenmodell wird insbesondere unterschieden zwischen Schichten, die zuständig sind für die fehlerfreie Übertragung von Daten von einem Computer zu einem anderen Computer innerhalb des Kommunikationsnetzes und Schichten, die diese Dienste in Anspruch nehmen.

Eine Schicht, die zur Aufgabe hat, eine Ende-zu-Ende-Kommunikation von einem Sendecomputer zu einem Empfängercomputer zu gewährleisten, ist die sogenannte Transportschicht (Schicht 4 innerhalb des OSI-Schichtenmodells).

Ein Beispiel für ein Protokoll der Transportschicht ist das **T**ransport **C**ontrol **P**rotocol (TCP), das üblicherweise zusammenwirkt mit dem **I**nternet **P**rotocol (IP) der Vermittlungsschicht (Schicht 3 des OSI-Schichtenmodells). Weiterhin ist es bekannt, im Rahmen des IP eine Übertragung der Daten gemäß unterschiedlichen Dienstgüteklassen (class of flow, COF für Integrated Services)auf Ebene der Vermittlungsschicht vorzusehen.

Zu unterscheiden von der Transportschicht ist beispielsweise die Anwendungsschicht (Applikationsschicht, Schicht 7 im OSI-Schichtenmodell), in der aus reiner Anwendungssicht, nicht aus einer Sicht, bei der die einzelnen Übertragungskomponenten berücksichtigt werden, die Übertragung von Daten mittels eines Kommunikationsprotokolls bestimmt wird. Die Anwendungsschicht enthält anschaulich üblicherweise die Anwenderprogramm.

Beispiele für Protokolle auf der Anwendungsschicht sind das **H**ypertext **T**ransfer **P**rotocol (HTTP), das Verfahren gemäß einem MPEG-Standard zum Codieren von Videodaten sowie ein Verfahren zum Übertragen von Stand-Bildern, beispielsweise das Verfahren gemäß dem JPEG-Standard. Weiterhin sind Verfahren zum Codieren von Sprachdaten gemäß dem Standard TIPHON, wie er aus **[**4**]** bekannt ist, in der Anwendungsschicht definiert.

Bei zu übertragenden multimedialen Daten ist zu unterscheiden zwischen zu übertragenden Daten, bei denen insbesondere eine sehr hohe Anforderung an eine zu gewährleistende sehr geringe Verzögerungszeit zwischen den Daten zu stellen ist, wie dies beispielsweise bei Sprachdaten oder Videodaten der Fall ist. Bei Sprachdaten ist es besonders wichtig, dass die gesendeten Sprachdaten mit einer sehr geringen Verzögerung beim Empfängercomputer empfangen werden, da sonst die Qualität der empfangenen, rekonstruierten Sprachdaten für den Benutzer des Empfängercomputers, der die rekonstruierten Sprachdaten hört, erheblich reduziert wird. Insbesondere solche Anforderungen werden im weiteren auch als Echtzeitanforderungen der Daten bezeichnet.

Im Gegensatz dazu sind in einem üblichen Multimedia-Datenstrom ferner zweite Daten ohne Echtzeitanforderungen enthalten, beispielsweise textuelle Daten, oder auch Standbild-Daten.

Bei solchen Daten kommt es lediglich generell auf die möglichst fehlerfreie Übertragung der Daten an, nicht aber unbedingt auf beispielsweise eine möglichst geringe Verzögerung der Übertragung zwischen den einzelnen Datenelementen.

Aus **[**2**]** und [8] ist es bekannt, jeweils eine Kommunikationsverbindung vorzusehen für erste Daten mit Echtzeitanforderung und zweite Daten ohne Echtzeitanforderung.

Weiterhin ist anzumerken, dass es üblicherweise bei mobilen Kommunikationsendgeräten oftmals unmöglich oder zumindest unpraktisch ist, über mehrere mobile Endgeräte separate Kommunikationsverbindungen für erste Daten mit Echtzeitanforderung und zweite Daten ohne Echtzeitanforderung, wie dies gemäß dem Stand der Technik aus **[**2**]** vorgesehen ist, aufzubauen. Dies ist insbesondere bei mobilen Kommunikationsendgeräten zurückzuführen auf die Ressourcenknappheit der mobilen Kommunikationsendgeräte und der zur Verfügung stehenden Bandbreite im Rahmen eines Mobilfunknetzes, die erheblich geringer ist als bei einem Kommunikationssystem, in dem lediglich ein Festnetz vorgesehen ist.

Um eine weitere Integration der Übertragung multimedialer Daten zu erreichen, ist es aus **[**3**]** bekannt, erste Daten mit Echtzeitanforderung und zweite Daten ohne Echtzeitanforderung im Rahmen einer Kommunikationsverbindung aus Sicht der Anwendungsschicht integriert zu übertragen.

Im Rahmen des bekannten Kommunikationssystems gemäß der MOVE-Architektur ist in **[**3**]** die Middleware VE-MASE (**V**oice **E**nabled **M**obile **A**pplication **S**upport **E**nvironment) definiert, die auf Client-Computern, die sich in einem vorgegebenen Kommunikationsnetz befinden, installiert sind sowie auf Gateways, die als Vermittlungs-Computer zwischen einem drahtgebundenen Teil und einem drahtlosen Teil eines Kommunikationsnetzes dienen sowie auf mobilen Kommunikationsendgeräten, wie beispielsweise einem Notebook, einem **P**ersonal **D**igital **A**ssistent (PDA) oder auch einem Mobilfunktelefon, mit dem eine Kommunikation gemäß dem **W**ireless **A**ccess **P**rotocol (WAP) möglich ist.

Ferner ist es aus [4] bekannt, erste Daten mit Echtzeitanforderungen in unterschiedliche Dienstgüteklassen (Quality of Service Classes, QoS-Klassen) einzuteilen. Jede Dienstgüteklasse der ersten Daten ist jeweils einer vorgegebenen gewährleisteten Qualität der rekonstruierten Sprachdaten zugeordnet, beispielsweise der zu gewährleistenden Verzögerung, der Zeit für den Verbindungsaufbau sowie weiteren Mechanismen zur Gewährleistung einer vorgegebenen Qualität des Sprachsignals.

Bei dem Verfahren aus **[**5**]** wird eine Abbildung der Übertragung von Daten aus der Anwendungsschicht auf die Transportschicht nur für eine Art von Daten, nämlich für die ersten Daten mit Echtzeitanforderung, gemäß dem Verfahren aus **[**5**]** Sprachdaten, beschrieben. Insbesondere wird die Wahl des zu verwendenden Sprachcodecs (Codec = Coder und Decoder) in Abhängigkeit von gemessenen Übertragungsparametern, das heißt dem Durchsatz, dem Jitter sowie der Verzögerung der zu übertragenden Daten, beschrieben.

Weiterhin ist aus **[**6**]** und [9] ein allgemeines Klassifikationsschema auf nicht-technischer Ebene für erste Daten mit Echtzeitanforderung und zweite Daten ohne Echtzeitanforderung bekannt.

Aus **[**7**]** ist das sogenannte Session Initiation Protocol (SIP) bekannt.

Der Erfindung liegt das Problem zugrunde, erste Daten mit Echtzeitanforderung und zweite Daten ohne Echtzeitanforderung auf Anwendungsschicht in aus Sicht der Anwendungsschicht einer einzigen Kommunikationsverbindung auf einfache Weise unter Berücksichtigung ihrer Anforderung an die Übertragungsqualität zu übertragen.

Das Problem wird durch das Verfahren zum integrierten Übertragen von ersten Daten mit Echzeitanforderung und zweiten Daten ohne Echtzeitanforderung, die Kommunikationsvorrichtung sowie durch das Kommunikationssystem mit den Merkmalen gemäß den unabhängigen Patentansprüchen gelöst.

Bei dem Verfahren zum Übertragen von ersten Daten mit Echzeitanforderung und zweiten Daten ohne Echtzeitanforderung ist zur Übertragung der ersten Daten eine Mehrzahl von ersten Dienstgüteklassen auf Ebene der Anwendungsschicht den ersten Daten zugeordnet. Zur Übertragung der zweiten Daten ist eine Mehrzahl von zweiten Dienstgüteklassen auf Ebene der Anwendungsschicht den zweiten Daten zugeordnet. Eine der aus den ersten Dienstgüteklassen und den zweiten Dienstgüteklassen gebildeten Kombinationsdienstgüteklassen wird in der Anwendungsschicht ausgewählt, wobei jeder Kombinationsdienstgüteklasse Übertragungsparameter zugeordnet sind, mit denen angegeben wird, mittels welcher Parameter die Übertragung der ersten Daten und der zweiten Daten erfolgen soll. Insbesondere wird eine Priorisierung der Übertragung der ersten Daten relativ zu den zweiten Daten und umgekehrt im Rahmen der Übertragungsparameter der jeweiligen Kombinationsdienstgüteklassen vorgesehen. Die ersten Daten und die zweiten Daten sowie die Übertragungsparameter der ausgewählten Kombinationsdienstgüteklasse werden einer Einheit der Transportschicht zugeführt, mittels der die ersten Daten und die zweiten Daten unter Berücksichtigung der Übertragungsparameter übertragen werden.

Die ersten Daten mit Echtzeitanforderung sind beispielsweise Sprachdaten, denen die ersten Dienstgüteklassen gemäß TIPHON, wie sie in **[**4**]** beschrieben sind, zugeordnet sein können. Zusätzlich kann zur weiteren Differenzierung noch eine zusätzliche Dienstgüteklasse vorgesehen sein zur verbesserten Anpassung der Dienstgüteklassen aus TIPHON auf die Anforderungen der integrierten Übertragung von Daten mit Echtzeitanforderung und Daten ohne Echtzeitanforderung.

Die ersten Daten können ferner auch Videodaten, insbesondere Daten gemäß dem MPEG-Standard oder einem Videotelefonstandard wie beispielsweise gemäß dem ITU-H.263-Standard enthalten.

Die zweiten Daten ohne Echtzeitanforderung können beispielsweise textuelle Daten, die beispielsweise gemäß dem HTTP-Protokoll oder gemäß dem WAP-Protokoll übertragen werden oder auch Standbild-Daten, beispielsweise gemäß dem JPEG-Standard.

Die zweiten Dienstgüteklassen können auf ähnliche Weise wie die ersten Dienstgüteklassen entsprechend der an die Übertragung der ersten Daten gestellten Anforderungen sowie die zur Gewährleistung der Anforderungen benötigten Ressourcen des Übertragungsmediums vorbestimmt sein.

Aus den ersten Dienstgüteklassen und den zweiten Dienstgüteklassen sind Kombinationsdienstgüteklassen gebildet, aus denen eine Kombinationsdienstgüteklasse ausgewählt wird und die der jeweiligen ausgewählten Kombinationsdienstgüteklasse zugeordneten Übertragungsparameter werden der Einheit der Transportschicht zugeführt. Den jeweiligen Dienstgüteklassen kann jeweils eine Priorität zugeordnet sein, mit der angegeben ist, mit welcher Priorität die jeweiligen Daten übertragen werden sollen. Die Kombinationsdienstgüteklassen können abhängig von den ersten Prioritäten und den zweiten Prioritäten, die den ersten Dienstgüteklassen bzw. den zweiten Dienstgüteklassen zugeordnet sind, gebildet werden.

Die Auswahl der Kombinationsdienstgüteklasse kann auf folgende Weise erfolgen:
a) es wird die Kombinationsdienstgüteklasse ausgewählt, die die erste Dienstgüteklasse mit höchster erster Priorität und die zweite Dienstgüteklasse mit höchster zweiter Priorität aufweist,
b) es wird geprüft, ob ein zu verwendender Coder die ersten Daten und die zweiten Daten gemäß den Übertragungsparametern der jeweiligen Kombinationsdienstgüteklasse übertragen kann,
c) ist dies der Fall, so wird die Kombinationsdienstgüteklasse ausgewählt,
d) wenn dies nicht der Fall ist, so wird eine weitere Kombinationsdienstgüteklasse ausgewählt derart, dass jeweils die Kombinationsdienstgüteklasse mit reduzierter zweiter Priorität ausgewählt wird, und
e) die Schritte b) und d) werden iterativ solange durchgeführt, bis der Coder die ersten Daten und die zweiten Daten gemäß den Übertragungsparametern der jeweiligen Kombinationsdienstgüteklasse übertragen kann.

Auf diese Weise wird eine sehr einfache Heuristik angegeben, gemäß der die Auswahl der Kombinationsdienstgüteklasse erfolgen kann. Insbesondere bei mobilen Kommunikationsendgeräten, beispielsweise einem Handy, in denen eine nur relativ geringe Rechenkapazität zur Verfügung steht, zeichnet sich diese einfache Heuristik durch ihren geringen Rechenzeitbedarf aus.

Heuristiken, die auf statistischen Modellen basieren, wie sie häufig aus unterschiedlichen Optimierungsproblemen bekannt sind, sind demgegenüber wesentlich rechenaufwendiger und für ein Kommunikationsendgerät mit geringer zur Verfügung stehender Rechenkapazität in der Praxis kaum einsetzbar.

In der Einheit der Transportschicht können die ersten und die zweiten Daten als ein Datenstrom mit vorgebbarer Transportschicht-Dienstgüteklasse codiert und übertragen werden.

Eine Kommunikationsvorrichtung, vorzugsweise eine mobile Kommunikationsvorrichtung, weist einen Prozessor auf, der derart eingerichtet ist, dass die oben beschriebenen Verfahrensschritte durchführbar sind.

Insbesondere bei einer mobilen Kommunikationsvorrichtung ist das oben beschriebene Verfahren aufgrund seiner Einfachheit und der geringen Anforderungen an die benötigte Rechenkapazität sehr gut geeignet.

In einem Kommunikationssystem ist eine mobile erste Kommunikationsvorrichtung sowie eine zweiten Kommunikationsvorrichtung vorgesehen. Die ersten Daten und die zweiten Daten werden von der ersten Kommunikationsvorrichtung zu der zweiten Kommunikationsvorrichtung übertragen.

Es ist anzumerken, dass insbesondere Sprachdaten sehr sensitiv sind auch für mobilfunktypische Schwankungen der Bandbreite und der Verzögerung oder der Varianz der übertragenden Sprachdaten.

Ein erheblicher Vorteil der Erfindung ist darin zu sehen, dass insbesondere bei heterogenen Mobilfunknetzen, das heißt bei Mobilfunknetzen mit unterschiedlichen Teilmobilfunknetzen, beispielsweise einem kostengünstigen proprietären Mobilfunknetzwerk einer Universität mit großer zur Verfügung stehender Bandbreite und einem öffentlichen UMTS-Mobilfunknetz mit relativ geringer zur Verfügung stehender Bandbreite, eine Anpassung entweder der Ende-zu-Ende-Qualität der übertragenen Daten direkt im Kommunikationsendgerät oder beim Umcodieren von einem Sprach/Videocodec auf einen anderen oder bei einem Filtern der Daten im Netzwerk beim Übergang vom einen zum anderen Mobilfunknetz, das auch als Handover bezeichnet wird, erforderlich wird.

Durch die Erfindung wird es nunmehr möglich, auf Anwendungsprotokollebene die Übertragung der Daten anzupassen und zu variieren aufgrund von einem Benutzer vorgegebenen und allgemein verständlichen Klassifikationen unter Einbeziehung aktuell gemessener QoS-Parameter, wie beispielsweise der Verzögerung, dem Jitter und der zur Verfügung stehenden Bandbreite, sowie abzubilden auf reale, den jeweiligen Datenstrom und den Übertragungsparametern beschreibenden Parametern, wie beispielsweise den Parametern, die den zur Codierung verwendeten Codec beschreiben, die verwendeten Übertragungsformate und/oder die Kompressionsparameter für Videodaten, Bilddaten oder textuelle Daten und diese applikationsabhängig zu verändern.

Die Erfindung eignet sich insbesondere für den Einsatz in der Internet-Telefonie, beispielsweise im Gebiet der sogenannte Voice over IP (VoIP) oder Video over IP über Kommunikationsverbindungen zum Übertragen ursprünglich textueller Daten. Eine solche Möglichkeit ist beispielsweise im Mobilfunkstandard 3GPP-Release 00 (UMTS) explizit als Multimedia Domain vorgesehen.

Ferner können in den Kommunikationsendgeräten eine Vielzahl unterschiedlicher Sprachcodecs, allgemein Codecs für Daten mit Echtzeitanforderung und/oder ohne Echtzeitanforderung entweder dauerhaft gespeichert sein oder auch temporär auf das Kommunikationsendgerät ladbar sein.

Durch die Erfindung wird es ferner ermöglicht, je nach Anforderungen einer gegebenen Anwendung eine ganz spezifische Priorisierung unterschiedlicher Informationsdatenströme und deren Anpassung vorzunehmen. So kann es in einer Anwendung möglich sein, dass die Daten mit Echtzeitanforderung wichtiger sind als Daten ohne Echtzeitanforderung. Es kann jedoch auch der Fall eintreten, dass die Daten ohne Echtzeitanforderung höher zu priorisieren sind im Rahmen der Datenübertragung als Daten mit Echtzeitanforderung.

Durch die Erfindung wird es möglich, dies schon auf der Ebene der Anwendungsschicht anzugeben.
Auch ist es gemäß der Erfindung möglich, schnell und flexibel auf Anwendungsprotokollebene auf wechselnde Übertragungsbedingungen der verwendeten Codecs bzw. des verwendeten Kommunikationsnetzes zu reagieren.

So kann beispielsweise auch bei Wissen über eine zu geringe zur Verfügung stehende Bandbreite, beispielsweise beim Handover, schon a priori die Dienstgüte der kombinierten Sprachdienste/Datendienste angepasst werden.

Dies führt zu einer weiteren Verbesserung der Gesamtleistung des zur Verfügung stehenden Kommunikationssystems.

Ein Ausführungsbeispiel der Erfindung ist in den Figuren dargestellt und wird im weiteren näher erläutert.

Es zeigen
- Figur 1: ein Ablaufdiagramm, in dem die einzelnen Verfahrensschritte des Verfahrens gemäß einem Ausführungsbeispiel der Erfindung dargestellt sind;
- Figur 2: ein Blockdiagramm, in dem die einzelnen Elemente eines Kommunikationssystems gemäß der MOVE-Architektur, wie sie bei dem Kommunikationssystem gemäß dem Ausführungsbeispiel der Erfindung vorgesehen ist, gezeigt ist;
- Figur 3: ein Blockdiagramm, in dem die einzelnen Komponenten der VE-MASE-Middleware gemäß der MOVE-Architektur innerhalb einer Kommunikationsvorrichtung, wie sie gemäß einem Ausführungsbeispiel der Erfindung eingesetzt wird, dargestellt ist;
- Figur 4: eine Tabelle der Kombinationsdienstgüteklassen gemäß einem Ausführungsbeispiel der Erfindung.

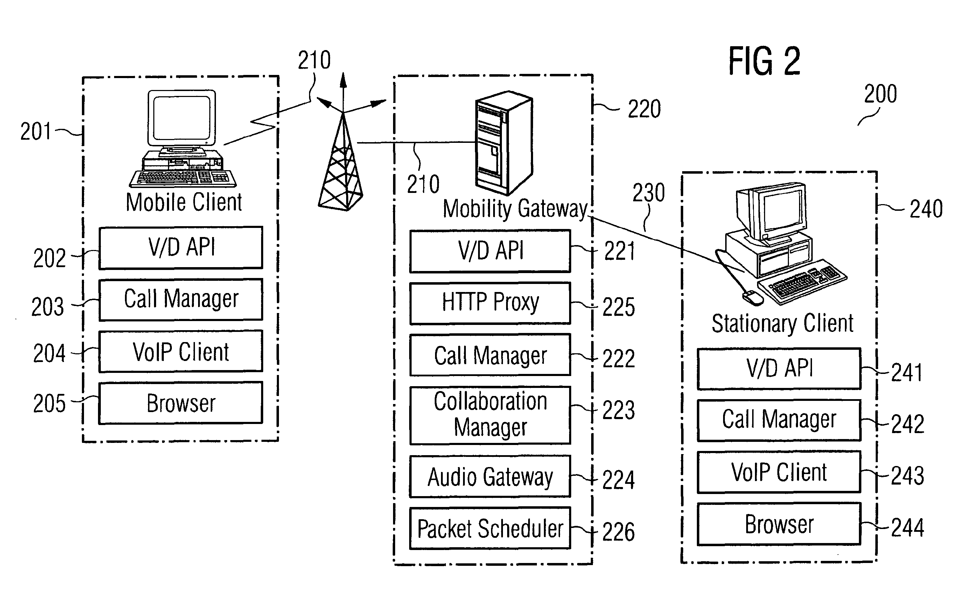

**Fig.2** zeigt ein Kommunikationssystem 200 mit einer mobilen Kommunikationsvorrichtung 201, gemäß dem Ausführungsbeispiel einem Notebook, einem PDA oder einem WAP-fähigen Mobilfunktelefon.

Wie in **Fig.2** symbolisch dargestellt ist, weist die mobile Kommunikationsvorrichtung 201 eine Eingabe-/Ausgabe-Schnittstelle 202 sowie eine Kommunikationsverbindungs-Verwaltungseinheit 203 (im Rahmen der MOVE-Architektur als Call Manager bezeichnet) auf.

Weiterhin ist in der mobilen Kommunikationsvorrichtung 201 ein Voice over IP-Client 204 installiert.

Weiterhin ist in der mobilen Kommunikationsvorrichtung 201 ein Browser-Programm, welches Daten gemäß dem HTML-Format oder dem WML-Format darstellen und codieren kann, installiert. In dem Voice over IP-Client 204 werden die Daten gemäß den UDP/IP-Protokollen in der Transportschicht bzw. in der Vermittlungsschicht gemäß dem OSI-Schichtenmodell codiert.

Es ist in diesem Zusammenhang anzumerken, dass der Voice over IP-Client und das Browser-Programm unabhängig voneinander agieren.

Die mobile Kommunikationsvorrichtung 201 ist über eine Funkverbindung 210, gemäß dem Ausführungsbeispiel eine Funkverbindung gemäß dem UMTS-Standard, mit einem Vermittlungs-Computer 220 gekoppelt.

Die Funkverbindung kann z.B. eine Verbindung gemäß dem drahtlosen **L**ocal **A**rea **N**etwork (drahtloses LAN), dem DECT, dem GSM, oder dem UMTS sein.

Der Vermittlungs-Computer 220 weist ebenfalls eine Eingabe/Ausgabe-Schnittstelle 221, einen Call Manager 222, sowie eine Kommunikationsverbindung-Anpassungs-Einheit 223, eine Audio-Schnittstelle 224, eine HTTP-Proxy-Einheit sowie einen Scheduler 226 auf.

Ferner ist mit dem Vermittlungs-Computer 220 über eine Festnetz-Verbindung 230 ein weiterer Computer als zweite Kommunikationsvorrichtung 240 gekoppelt.

Eine Kommunikationsverbindung wird zwischen der mobilen Kommunikationsvorrichtung 201 und der zweiten Kommunikationsvorrichtung 240 über die Funkverbindung 210, dem Vermittlungs-Computer 220 sowie die Festnetz-Verbindung 230 aufgebaut und die Kommunikation erfolgt über die aufgebaute Kommunikationsverbindung.

Die zweite Kommunikationsvorrichtung 240 weist ebenfalls eine Eingabe-/Ausgabe-Schnittstelle 241 sowie eine Kommunikationsverbindungs-Verwaltungseinheit 242 auf. Ferner ist in der zweiten Kommunikationsvorrichtung 240 ein Voice over IP-Client 243 sowie ein Browser-Programm 244 installiert, die gemäß einem vorgegebenen Protokoll auf der Anwendungsschicht bzw. der Transportschicht mit der entsprechenden Einheit der mobilen Kommunikationsvorrichtung 201 kommunizieren können.

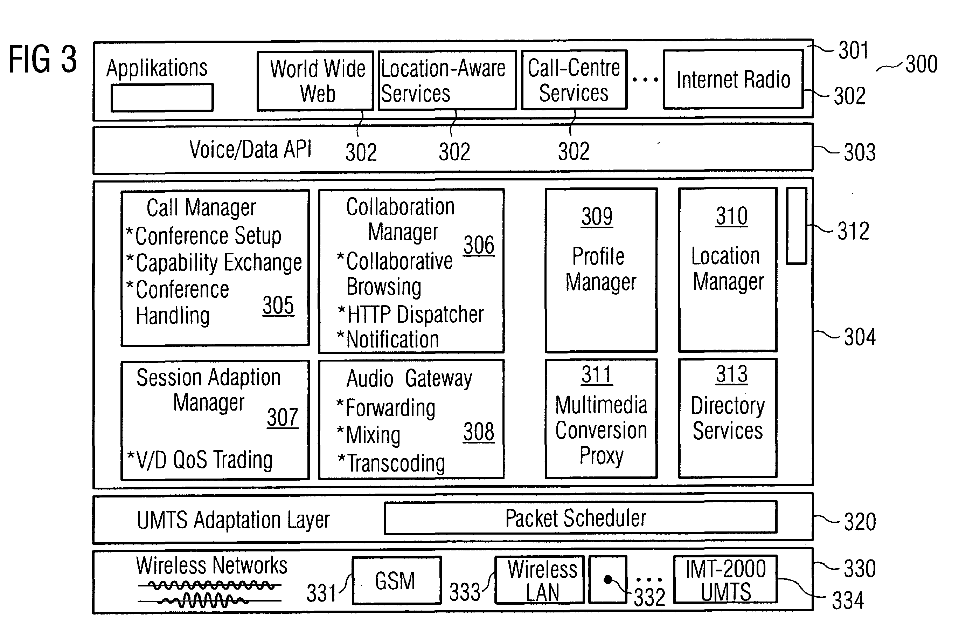

Die im weiteren beschriebene, in **Fig.3** dargestellte VE-MASE-Middleware der MOVE-Architektur ist sowohl auf den Kommunikationsvorrichtungen 201, 240 als auch in dem Vermittlungscomputer 220 installiert.

Wie im weiteren beschrieben wird, werden durch die Middleware folgende Dienste gewährleistet:
- Die Übertragung von Daten von und zu der jeweiligen Kommunikationsvorrichtung gemäß einem HTTP-Protokoll oder dem WAP-Protokoll, und
- das Übertragen von Audiodaten über ein Mobilfunknetz, wobei sowohl die Umcodierung als auch das Scheduling von Echtzeitdaten und nicht Echtzeitdaten, das heißt von ersten Daten mit Echtzeitanforderung und von zweiten Daten ohne Echtzeitanforderung gewährleistet wird.

Im weiteren werden auszugsweise einige Komponenten der Vorrichtungen gemäß der aus **[**3**]** im Detail beschriebenen und definierten MOVE-Architektur erläutert.

Von dem Audio-Gateway wird der Dienst erbracht der Echtzeit-Audio-Konferenz zwischen Einheiten, die über eine Mobilfunkverbindung kommunizieren und Einheiten, die in einem Festnetz miteinander kommunizieren und Einheiten, die sich innerhalb eines Festnetzes befinden und über ein Festnetz-Verbindung kommunizieren.

Durch das Audio-Gateway werden erste Daten, das heißt in diesem Fall Audio-Daten, insbesondere Sprachdaten, entsprechend den sich verändernden Anforderungen angepasst durch veränderte Codecs und deren Parameter, durch Rausch-Unterdrückung und durch Umcodieren der jeweiligen Datenströme.

Von dem Scheduler gemäß dem Ausführungsbeispiel der Erfindung wird gewährleistet, dass die ersten Daten mit Echtzeitanforderung, das heißt die Sprachdaten und die Videodaten, nicht durch zweite Daten ohne Echtzeitanforderung, beispielsweise textuelle Daten wie Daten gemäß dem HTML-Format oder eine elektronische Mail, verzögert werden, wobei üblicherweise Audio-Daten eine höhere Priorität zugewiesen bekommen im Rahmen der Übertragung, als den Videodaten.

In dem Scheduler eingehende Datenpakete werden gemäß ihrer dem jeweiligen Datenpaket zugeordneten Dienstgüteklasse eingeteilt.

Ferner werden von dem Scheduler Dienstgüteparameter gemessen für jeden Datenstrom und die Messergebnisse werden der Kommunikationsverbindungs-Anpassungs-Einheit 223 zugeführt.

Der Call Manager ist über die im Rahmen des Kommunikationssystems 200 verbundenen Kommunikationsvorrichtungen verteilt.

Der Call Manager ist verantwortlich für
- den Aufbau einer Kommunikationsverbindung,
- für das Steuern der Kommunikationsverbindung, und
- das Beenden der Kommunikationsverbindung, in der sowohl erste Daten mit Echtzeitanforderung als auch zweite Daten ohne Echtzeitanforderung zwischen der mobilen Kommunikationsvorrichtung 201 und der zweiten Kommunikationsvorrichtung 240 ausgetauscht werden.

Die Kommunikationsverbindungs-Verwaltungs-Einheit 203 ist derart eingerichtet, dass das Session Initiation Protocol SIP, wie es in [7] beschrieben ist, realisiert ist.

Von dem HTTP-Proxy werden Daten gemäß dem HTML-Format entsprechend der jeweiligen Kommunikationsvorrichtung, an die die Daten gesendet werden sollen, auf deren Anforderungen bzw. Fähigkeiten abgebildet. So wird beispielsweise mittels des HTTP-Proxys 225 bei Bedarf Farbinformation unterdrückt, das heißt Farbbilder werden auf Schwarz/Weiß-Bilder abgebildet, wenn die Empfängervorrichtung lediglich Schwarz/Weiß-Bilder darstellen kann. Ferner können unterschiedliche Skalierungen und Auflösungen der Information verändert werden oder es werden sogar ganze Videodaten oder Bilddaten herausgefiltert, beispielsweise bei dem Übergang von einem HTML-Datenformat zu einem WML-Datenformat.

Weitere Details sind der Beschreibung der MOVE-Architektur, wie sie in **[**3**]** definiert ist, zu entnehmen.

In **Fig.3** ist für eine Kommunikationsvorrichtung eine Übersicht dargestellt für die einzelnen Elemente und deren symbolische Anordnung innerhalb des Schichtenmodells.

In der Anwendungsschicht 301 der Kommunikationsvorrichtung 300 sind die einzelnen Anwendungsprogramme 302, beispielsweise der World Wide Web-Browser, verschiedene Call Center-Dienste, oder auch beispielsweise ein Programm zur Durchführung von Internet-Radio, gespeichert.

Weiterhin sind gemäß der VE-MASE-Architektur, wie sie in **[**3**]** beschrieben ist, eine Sprach-/Daten-Schnittstelle 303 sowie eine Mobilfunk-Schnittstelle 304 vorgesehen.

Ferner sind in der Anwendungsschicht 301
- der Call Manager 305 zum Aufbau und Verwalten einer Kommunikationsverbindung ein Collaboration Manager 306 zum Verwalten der Web-Datenströme,
- die Kommunikationsverbindungs-Anpassungs-Einheit 307, sowie
- die Audio-Schnittstelle 308 vorgesehen.

Ferner sind im Rahmen der Mobilfunk-Schnittstelle 304 vorgesehen:
- eine Profile-Verwaltungseinheit 309 zum Verwalten der Profile der möglichen Kommunikationspartner,
- eine Location-Verwaltungseinheit 310,
- eine Multimedia-Konvertierungs-Einheit 311,
- eine Benutzer-Verwaltungseinheit 312,
- eine Directory-Dienste-Einheit 313,
- eine Ereignis-Verwaltungseinheit 314.

Die Einheiten der Anwendungsschicht 301 sind mit Einheiten einer UMTS-Anpassungsschicht 320 gekoppelt.

Die UMTS-Anpassungsschicht 320 ist mit ihren Einheiten mit unterschiedlichen mobilen Funknetzen 330 gekoppelt, wobei die Einheiten der UMTS-Anpassungsschicht derart eingerichtet sind, dass die Daten der Anwendungsschicht 301 entsprechend abgebildet werden auf die erforderlichen Formate, die je nach verwendetem (Mobil-)Funk-Datenformat zur Übertragung erforderlich sind.

Als (Mobil-)Funk-Protokoll kann beispielsweise das Protokoll gemäß dem GSM-Standard 331, oder auch das Protokoll gemäß dem drahtlosen Übertragungsprotokoll DECT 332 oder das Protokoll gemäß dem drahtlosen LAN 333 oder auch das Protokoll gemäß dem IMT-2000 UMTS 334 eingesetzt werden.

Im weiteren wird eine Übersicht der Funktionalität der Kommunikationsverbindung-Anpassungs-Einheit 307 gegeben.

Durch die Kommunikationsverbindung-Anpassungs-Einheit 307 wird eines unter unterschiedlichen zur Verfügung stehenden Kommunikationsnetzen, das heißt unterschiedlichen eingesetzten drahtlosen Kommunikationsverbindungen gemäß unterschiedlichen Übertragungsprotokollen, ausgewählt derart, dass das ausgewählte Kommunikationsnetz mit vorgegebenen Dienstgüteanforderungen übereinstimmen, beispielsweise einer verfügbaren Bandbreite oder auch einem vorgegebenen Preis einer Kommunikationsverbindung, das heißt einem vorgegebenen Tarif.

Von der Kommunikationsverbindungs-Anpassungs-Einheit 307 können Signale erzeugt werden, mit denen angegeben wird, in welcher Weise zu übertragende Daten komprimiert, konvertiert, transcodiert werden oder sogar einzelne Multimedia-Objekte, beispielsweise einzelne Bilder oder Videos, vor der Übertragung herausgefiltert werden.

Wenn beispielsweise Bild-Daten oder Video-Daten zu einer Kommunikationsvorrichtung übertragen werden sollen, die lediglich Bilddaten bzw. Videodaten in Schwarz/Weiß darstellen kann, werden gemäß den Steuersignalen der Kommunikationsverbindungs-Anpassungs-Einheit 307 Daten, die Farbinformation repräsentieren, entfernt, wodurch die benötigte Bandbreite reduziert wird.

Allgemein wird durch die Kommunikationsverbindungs-Anpassungs-Einheit 307, wie im weiteren näher erläutert wird, eine Kombinationsdienstgüteklasse ausgewählt, die Übertragungsparameter festsetzt, mittels derer eine Übertragung der zu übertragenden Daten erfolgt unter Berücksichtigung der durch die Übertragungsparameter bestimmten Rahmenbedingungen.

So wird beispielsweise bei Verringerung der zur Verfügung stehenden Bandbreite bei einer drahtlosen Kommunikationsverbindung beispielsweise durch veränderte Auswahl eines Codecs zum Codieren von Audio-Daten, durch Anfordern einer Reduktion der Größe von HTML-Daten bei dem Multimedia-Konvertierungs-Proxy, durch Unterdrücken der Übertragung von Sprache, durch Unterdrückung der Möglichkeit, gemäß dem HTTP-Protokoll oder dem WAP-Protokoll Daten auszutauschen, eine Anpassung erreicht der zur Verfügung stehenden Übertragungs-Ressourcen auf Anwendungsschicht an die Erfordernisse der zu übertragenden Daten.

Es wird im weiteren davon ausgegangen, dass von der mobilen Kommunikationsvorrichtung 300 erste Daten mit Echtzeitanforderung, gemäß dem Ausführungsbeispiel Sprachdaten, sowie zweite Daten ohne Echtzeitanforderung, gemäß dem Ausführungsbeispiel textuelle Daten, die beispielsweise gemäß dem ASCII-Format codiert sind, übertragen werden sollen.

Den Sprachdaten, das heißt den ersten Daten, sind folgende fünf Dienstgüteklassen zugeordnet:
1. Dienstgüteklasse 5 (Best-mögliche Qualität):
   Gemäß der ersten Dienstgüteklasse wird eine Kommunikationsverbindung gewährleistet, die eine gemäß den zur Verfügung stehenden Übertragungs-Ressourcen zur Verfügung gestellt wird. Gemäß der ersten Dienstgüteklasse können im Rahmen der Übertragung der Sprachdaten beim Empfänger Verzögerungen des Sprachsignals auftreten. Bei einer hohen Netzbelastung können Verzögerungen auftreten, die dazu führen, dass die Qualität der übertragenen Sprachdaten unter eine übliche Qualität übertragener Sprachdaten in einem zellularen Mobilfunknetz üblicherweise gewährleistet wird.
2. Dienstgüteklasse 4 (Niedrige Qualität):
   Gemäß einer zweiten Dienstgüteklasse wird eine etwas verbesserte Qualität der übertragenen Sprachdaten gewährleistet.
3. Dienstgüteklasse 3 (Mittlere Qualität): Eine mittlere Qualität der übertragenen Sprachdaten wird gemäß einer dritten Dienstgüteklasse gewährleistet, wobei die mittlere Qualität im wesentlichen der Qualität eines üblichen drahtlosen Mobilfunknetzes entspricht. Die Qualität wird beispielsweise gewährleistet mittels einer Kommunikationsverbindung über eine übliche IP-Kommunikationsverbindung.
4. Dienstgüteklasse 2 (Hohe Qualität):
   Gemäß einer vierten Dienstgüteklasse wird eine Qualität der zu übertragenden Sprachdaten gewährleistet, die der einer üblichen Festnetz-Telefonverbindung mit etwas verzögerter, das heißt erhöhter Verzögerung der Sprachdaten, entspricht.
5. Dienstgüteklasse 1 (Maximale Qualität):
   Eine fünfte Dienstgüteklasse verlangt die Übertragung der Sprachdaten in höchster Qualität, die gemäß dem zu verwendenden Kommunikationsnetz überhaupt gewährleistet werden kann. Die Qualität ist mindestens genauso gut wie die Qualität einer üblichen Festnetz-Telefonverbindung.

Wie in [4] beschrieben ist, kann die Qualität der Sprachdaten mittels eines sogenannten "**M**ean **O**pinion **S**core" (MOS), der eine subjektive Qualitätsempfindung der dargestellten Sprachdaten von einer Vielzahl von Testpersonen wiedergibt.

Die Qualitätsskala beim MOS liegt zwischen einem Wert 1, der eine nicht akzeptable Qualität des Sprachsignals beschreibt und einem Wert 5, der eine exzellente Qualität der Sprachdaten repräsentiert.

Ein üblicher Telefon-Codec erreicht einen MOS von ungefähr 4,0.

Die oben beschriebenen ersten Dienstgüteklassen sind in der folgenden Tabelle in einer Übersicht mit dem jeweils zu erreichenden MOS dargestellt.

In der Tabelle ist ferner für jede erste Dienstgüteklasse die mittlere Verzögerungszeit angegeben, die gewährleistet werden muss, gerechnet von dem Zeitpunkt, zu dem der Sprecher das Sprachsignal ausspricht und dem Zeitpunkt, zu dem das übertragene, rekonstruierte Sprachsignal von der Empfängervorrichtung ausgegeben wird, in der Tabelle als Mouth-to-Ear Delay bezeichnet.

Weiterhin ist eine maximale Zeitdauer angegeben, die für den Verbindungsaufbau der Kommunikationsverbindung benötigt werden darf, in der Tabelle als Call Set-up bezeichnet.

| | Maximum 1 | Hoch 2 | Mittel 3 | Niedrig 4 | Best möglich 5 |
|---|---|---|---|---|---|
| MOS Qualität | 4.2-5.0 | 3.4-4.2 | 2.6-3.4 | 1.8-2.6 | 1.0-1.8 |
| Mouth-to-Ear Delay | 0-150 ms | 150-250 | 250-350 | 350-500 | ≥500ms |
| Call Set-up | 0-1 sec | 1-3 sec | 3-5 sec | 5-10 sec | ≥ 10 sec |

Die Dienstgüteklassen, die den ersten Daten zugeordnet sind, werden im weiteren als erste Dienstgüteklassen bezeichnet.

Den zweiten Daten ohne Echtzeitanforderung, das heißt den textuellen Daten, sind ebenfalls Dienstgüteklassen zugeordnet, die im weiteren als zweite Dienstgüteklassen bezeichnet werden.

Die zweiten Dienstgüteklassen unterscheiden sich hinsichtlich der zu gewährleistenden Fehlerwahrscheinlichkeit, die maximal im Rahmen einer Kommunikationsverbindung auftreten darf.

Im weiteren wird von vier zweiten Dienstgüteklassen ausgegangen.

Der Fall, dass Zweite Daten übertragen werden können und sollen (CWB/MMC) kann weiter verfeinert werden in folgende Konvertierungsformen für Bilddaten:
i) Es erfolgt keine Farbkonvertierung (Farbqualität der gesendeten Bildinformation des Senders kommt unverändert bei Empfänger an);
ii) Vielfarbigkeit nach vier Farben (breites Farbspektrum wird abgebildet auf gröberes Raster);
iii) Farben, d.h. Farbinformation wird auf Grauwertstufen abgebildet;
iv) Farben oder Grauwerte der Farbinformation werden auf Schwarz/Weiss-Information abgebildet (wie z.B. bei der Abbildung von HTML-Bildern auf Bilder, die gemäß dem WAP-Standard bei einem WAP-Handy dargestellt wird)

Durch verfeinerte Degradationen im Spektrum möglicher Qualitätsstufen der Farbkonversion (allgemein, der Multimediakonversion) können Bandbreitenschwankungen ausgeglichen werden.

Orthogonal zur Farbe kann z.B. auch die Körnigkeit (Bildauflösung) oder die Bildgröße skaliert werden. Skalierungen im Sinne von Vergrößerungen oder Verkleinerungen sind möglich und werden vermöge diverser MMC-Modi (**M**ulti**m**edia **C**onversion-Modi) realisiert.

Auch in diesem Fall gilt wieder: Je feiner die Auflösung bzw. je größer das übertragene Bild, desto mehr Bandbreite ist erforderlich.

Somit kann auch in diesem Fall eine Übertragungskapazitätsschwankung ausgeglichen werden durch Anpassung der Qualität von Multimediakonversion.

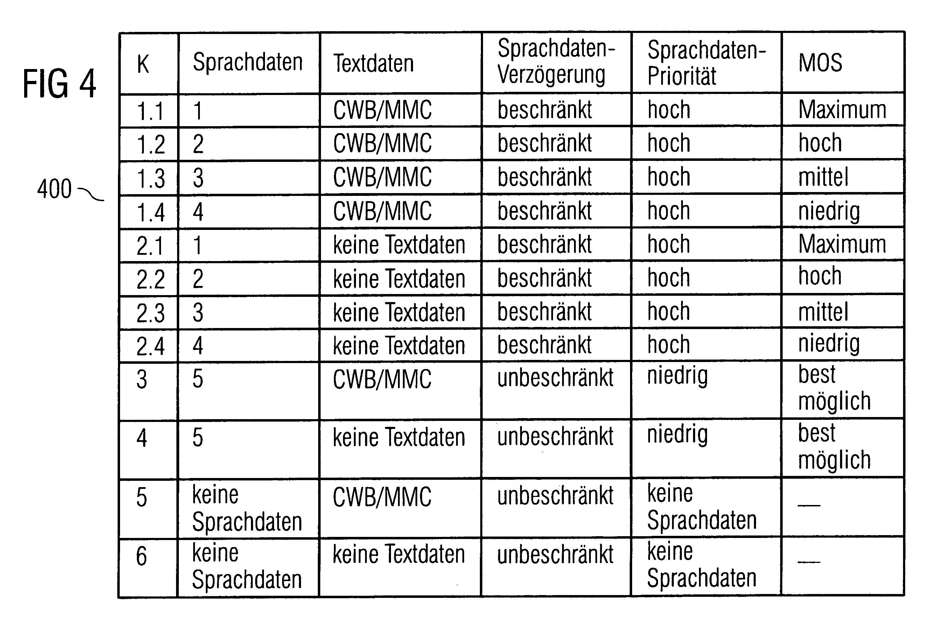

Zusammenfassend kann man sagen dass die Klassen 1.x, 3 und 5 in **Fig.4** entsprechend verschiedenen Multimedia-Dimensionen wie Farbigkeit, Granularität, Größe etc in beliebigen Kombinationen verfeinert werden können.

**Fig.4** zeigt eine Tabelle 500, in der einzelne Kombinationsdienstgüteklassen dargestellt sind, welche sich ergeben aus der Kombination der einzelnen ersten Dienstgüteklassen und zweiten Dienstgüteklassen.

Wie **Fig.4** zu entnehmen ist, kann gemäß dem Ausführungsbeispiel bezüglich der Sprachdaten eine Unterscheidung in drei Kategorien erfolgen.
- In einer ersten Kategorie wird angenommen, dass die jeweilige zweite Dienstgüteklasse während einer Kommunikationsverbindung gewährleistet werden kann, wobei die vorgegebene Verzögerungszeit der empfangenen Sprachdaten niemals überschritten wird.
- In einer zweiten Kategorie ist lediglich möglich, die erste Dienstgüteklasse niedrigster Qualität zu gewährleisten.
- In einer dritten Kategorie wird angegeben, dass keine Übertragung von Sprachdaten über das Kommunikationsnetz möglich ist.

Die erste Kategorie ist in **Fig.4** in der Spalte "Sprache" durch die Ziffern 1 bis 4 gekennzeichnet, der zweite Fall durch die Ziffer 5 und der dritte Fall durch den Ausdruck "keine Sprachdaten".

Weiterhin ist in den Kombinationsdienstgüteklassen K unterschieden, ob textuelle Daten, das heißt ob zweite Daten ohne Echtzeitanforderungen auch übertragen werden müssen.

Diese Unterscheidung ist in der Spalte "Daten" der **Fig.4** dargestellt.

Sollen zweite Daten ohne Echtzeitanforderung übertragen werden, so ist dies in der Spalte "Daten" der Tabelle 500 mit "CWB/MMC" gekennzeichnet (CBW: **C**ollaborative **W**eb **B**rowsing, MMC: **M**ulti**M**edia **C**onversion).

Damit ist ausgesagt, wozu typischerweise Nicht-Echtzeitdaten, d.h. zweite Daten, überhaupt übertragen werden, und wie sie übertragen werden, nämlich zum Beispiel zum Zwecke des gemeinsamen (kollaborativen) Betrachtens bzw. Bearbeitens von Bilddaten, und zwar unter Zuhilfenahme von Konversionstechniken für Multimediadaten (etwa Konversion von farbiger zu Grauwertdarstellung, oder Ausblendung von Sounds oder beweglichen Applets in HTML-Dokumenten, falls nötig).

Sollen keine zweiten Daten übertragen werden im Rahmen der Kommunikationsverbindung, so ist dies in der Tabelle 500 mit dem Ausdruck "keine Textdaten" angegeben.

Werden erste Daten und/oder zweite Daten von der Kommunikationsvorrichtung übertragen, so wird von der Kommunikationsverbindungs-Anpassungs-Einheit 307 eine Kombinationsdienstgüteklasse K der in **Fig.4** dargestellten Kombinationsdienstgüteklassen K ausgewählt.

Die Auswahl erfolgt durch die Kommunikationsverbindungs-Anpassungs-Einheit 307 zyklisch in einem zeitlichen Abstand von einigen Sekunden.

In jedem im weiteren beschriebenen Zyklus wird ein hinsichtlich der Kombinationsdienstgüteklasse K und der zur Verfügung stehenden Bandbreite optimierter Codec zum Codieren der ersten Daten und der zweiten Daten bestimmt, welcher die aktuell zur Verfügung stehende Bandbreite möglichst gut ausnutzt und eine optimierte Übertragungsrate ermöglicht.

Die Auswahl erfolgt abhängig von unterschiedlichen Dienstgüteparametern, die gemäß dem Ausführungsbeispiel im wesentlichen in drei Klassen eingeteilt werden können, aus denen der optimierte Codec bestimmt wird:
- Eine erste Klasse von Dienstgüteparametern sind Profil-Parameter, das heißt Dienstgüteparameter, die von den Benutzern der Kommunikationsendgeräte, den Kommunikationsendgeräten selbst oder von der jeweiligen Anwendung bestimmten bzw. abhängigen Kenndaten. Beispiele solcher Profilparameter sind Prioritäten zur relativen Bevorzugung der ersten Daten mit Echtzeitanforderung oder zweiten Daten ohne Echtzeitanforderung, eine Angabe über die Benachteiligung oder Gleichbehandlung von ersten Daten mit Echtzeitanforderung und zweiten Daten ohne Echtzeitanforderung, eine Angabe über eine mögliche Notwendigkeit der Konvertierung von Multimedia-Daten, beispielsweise eine Angabe über die Reduktion von HiFi-Qualität von Audio-Daten für minderwertige Lautsprecher oder Kopfhörer, die Konvertierung von Farbinformation auf Helligkeitsinformation, das heißt auf Grauwerte für Schwarz/Weiß-Bildschirme, eine Angabe über maximal tolerierbare Verzögerungswerte der empfangenen, das heißt der zu übertragenden Daten, etc.. Profil-Parameter können auch andere Rahmenbedingungen enthalten, beispielsweise benutzerdefinierbare Parameter, anwendungsabhängige Parameter oder Vorgaben, die von dem Kommunikationsendgerät selbst verursacht werden, wie beispielsweise ausgehandelte Tarife, welche an bestimmte maximale gewährleistete Dienstgüteklassen gebunden sind.
- Weitere Dienstgüteparameter können Parameter sein, die für die Dauer eines Zyklus gespeichert sind, in einem neuen Zyklus neu initialisiert worden sind bzw. seit einigen vorangegangenen Zyklen gültige Dienstgüteparameterwerte. Beispiele für solche Dienstgüteparameter sind insbesondere der gespeicherte Typ des Kommunikationsnetzes, das im Rahmen der Kommunikationsverbindung verwendet wird, beispielsweise GSM, DECT, HSCSD, drahtloses LAN, etc., sowie die im zeitlich vorangegangenen Zyklus ermittelten Werte des verwendeten Codecs, der Übertragungsraten und Verlustraten von Datenpaketen im Rahmen der Kommunikationsverbindung.
- Weitere Dienstgüteparameter können vom Audio-Gateway gemessene Parameter einer Kommunikationsverbindung, beispielsweise aktuelle Werte verfügbarer, aktuell ermittelter Bandbreiten auf Kommunikationsverbindungen zu nahen (lokalen) und entfernten (remote) Netzknoten, das heißt Vermittlungs-Computern sein, wie auch lokale und entfernte Jitter-Werte und Verzögerungswerte bei der Übertragung von Daten über die entsprechende Kommunikationsverbindung, sowie eine durchschnittliche Länge von Informationsstrom-Rückstaus, etc.

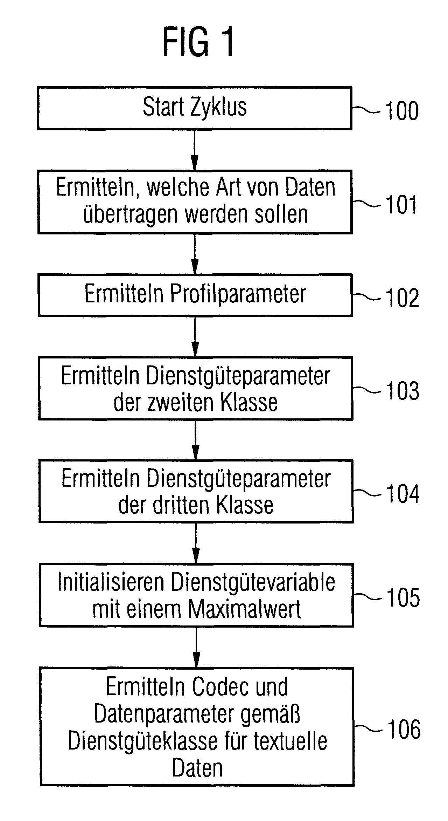

Im weiteren wird anhand von **Fig.1** das Verfahren gemäß dem Ausführungsbeispiel der Erfindung zur Auswahl einer Kombinationsdienstgüteklasse K im Detail erläutert.

In einem ersten Schritt (Schritt 100) wird der Zyklus gestartet.

In einem weiteren Schritt (Schritt 101) wird ermittelt, welche Art von Daten übertragen werden sollen.

Im weiteren wird davon ausgegangen, dass erste Daten mit Echtzeitanforderung und zweite Daten ohne Echtzeitanforderung im Rahmen der Kommunikationsverbindung übertragen werden sollen.

Für eine eindeutig identifizierbare Kommunikationsverbindung, in der zwei oder eine Vielzahl von Kommunikationsendgeräten miteinander kommunizieren können, wovon mindestens eine Kommunikationsvorrichtung eine mobile Kommunikationsvorrichtung ist, werden in einem weiteren Schritt (Schritt 102) die aktuellen Profilparameter der mobilen Kommunikationsvorrichtung ermittelt, darunter die gewünschten Prioritäten, die den ersten Daten bzw. den zweiten Daten zugeordnet sind.

In einem weiteren Schritt (Schritt 103) werden die Dienstgüteparameter der oben dargestellten zweiten Klasse eingelesen, darunter
- der Typ des verwendeten Kommunikationsnetzes im Rahmen der Kommunikationsverbindung zuvor gespeicherte Dienstgütemerkmale,
- der zuvor im vorangegangenen Zyklus verwendete lokale Codec, der mittels Codierungsparameter beschrieben wird,
- der im vorangegangenen Zyklus verwendete Codec des entfernten Kommunikationspartners, das heißt der jeweiligen entfernten Kommunikationsvorrichtung,
- die gespeicherte lokale Verlustrate, und
- die gespeicherte Verlustrate des entfernten Kommunikationspartners im Rahmen des vorangegangenen Zyklus.

In einem weiteren Schritt (Schritt 104) werden die beispielsweise vom Audio-Gateway zur Verfügung gestellten Dienstgüteparameter der oben dargestellten Klasse drei ermittelt, das heißt beispielsweise die Art der Multimedia-Konvertierung, falls diese dynamisch ausgestaltet ist, die zur Verfügung stehenden Verzögerungswerte, die Schwellwerte usw.

In einem weiteren Schritt (Schritt 105) wird eine Dienstgütevariable tryQoS mit einem Maximalwert initialisiert.

Die Dienstgütevariable tryQoS ist ein Wert, der in **Fig.4** in der linken Spalte zur Kennzeichnung der Kombinationsdienstgüteklasse K dargestellt ist.

Gemäß der Heuristik, wie sie gemäß dem Ausführungsbeispiel eingesetzt wird, wird die Dienstgütevariable tryQoS versuchsweise mit einem möglichst hohen Wert initialisiert, in Abhängigkeit der eingelesenen aktuellen Profilparameter.

Wie im weiteren beschrieben wird, wird der Wert der Dienstgütevariable tryQoS nach und nach reduziert, wenn es gemäß aller anderen aktuellen Dienstgüteparameter keinen geeigneten Codec gibt, der die Anforderungen der aktuellen Kombinationsdienstgüteklasse K gewährleistet, und zwar so lange, bis ein geeigneter Codec ermittelt worden ist, oder bis alle verfügbaren Codecs erfolglos durchprobiert worden sind.

Es ist selbstverständlich möglich, dass es für jede Kombinationsdienstgüteklasse mehrere geeignete Codecs geben kann, je nachdem, ob die entsprechenden Codecs in der Kommunikationsvorrichtung implementiert sind.

So lange noch kein geeigneter Codec ermittelt worden ist (While-Schleife 106) wird folgendes Verfahren durchgeführt:

In einem ersten Schritt wird überprüft, ob die Dienstgütevariable ≥ 1.1 ist und ≤ 4 ist. Dies entspricht dem Fall, dass eine Übertragung von Sprachdaten, allgemein von ersten Daten mit Echtzeitanforderung, überhaupt möglich ist.

Im Weiteren wird für alle verfügbaren Codecs i, die eine Übertragung gemäß der Kombinationsdienstgüteklasse, die durch den durch die Dienstgütevariable tryQoS bezeichnet ist, ermittelt, ob der jeweilige Codec i die geforderten Dienste zur Verfügung stellen kann.

Ist dies der Fall, so findet das Verfahren geeignete Codecs. Die Codecs werden gemeinsam mit der zu dem Codec i gehörigen Frames pro IP-Datenpaket in einer Liste abgespeichert und es wird überprüft, ob abhängig von der zur Verfügung stehenden Bandbreite die von dem jeweiligen Codec i benötigte Bandbreite zur Verfügung steht. Anschließend wird eine Liste möglicher Datenparametersätze (z.B. gemäß der Dienstgüteklasse für Bilddaten) entsprechend der resultierenden Bandbreite für Daten und persönlichen Präferenzen des Nutzers bestimmt.

Anschließend wird in einem weiteren Schritt die jeweils optimale Kombination aus den beiden Listen (Codec, Bilddatenparameter) ausgewählt.

Im Fall der kombinierten Dienstgüteklassen K 1.X (Hohe Sprachdatenpriorität relativ zu den Bilddaten) wird derjenige Codec i mit der höchsten Sprachqualität (beschrieben gemäß diesem Ausführungsbeispiel durch den Parameter MOS)und die niedrigste Anzahl von Frames pro IP-Datenpaket, die mit der Bandbreite vereinbar ist, ausgewählt.

Für die Bilddaten wird ein Konvertierungsschema in Abhängigkeit von der resultierenden Bandbreite gewählt. Ist diese sehr gering, so werden die Bilder nur noch entsprechend der Klasse iv) von Farben oder Grauwerten nach Schwarz/Weiss-Bildinformation konvertiert.

Im Fall der kombinierten Dienstgüteklasse K 3 (niedrige Sprachdatenpriorität relativ zu den Bilddaten) wird derjenige Codec i mït der niedrigsten Sprachqualität und die höchste Anzahl von Frames pro IP-Datenpaket, die mit der Bandbreit vereinbar ist, ausgewählt. Die Bilddaten werden in der bestmöglichen Qualität übertragen.

Für die Dienstgüteklasse K 2.x und 4 (keine Bilddaten) werden nur der Codec und seine Parameter optimiert.

Kann für die jeweilige Dienstgütevariable kein Codec ermittelt werden, der unter Berücksichtigung der zur Verfügung stehenden Bandbreite die Kombinationsdienstgüteklasse, das heißt die entsprechenden Anforderungen gewährleisten kann, so wird der Wert der Dienstgütevariable tryQoS reduziert gemäß folgender Reihenfolge der zu untersuchenden Kombinationsdienstgüteklassen:
1.1 → 1.2 → 1.3 → 1.4 → 3 → 5
bzw.
2.1 → 2.2 → 2.3 → 2.4 → 4 → 6.

Diese Heuristik, die die Reihenfolge der zu untersuchenden Kombinationsdienstgüteklassen vorgibt, bedeutet anschaulich, dass jeweils für eine Kombinationsdienstgüteklasse, beginnend mit der besten Kombinationsdienstgüteklasse mit maximalem Bandbreitenbedarf, überprüft wird, ob genügend Bandbreite zur Verfügung steht für den jeweiligen Codec.

Ist dies nicht der Fall, so wird eine jeweils um eine Klasse verschlechterte Kombinationsdienstgüteklasse ausgewählt und es wird überprüft, ob für diese Kombinationsdienstgüteklasse ein Codec zur Verfügung steht und ob für diesen Codec eine ausreichende Menge an Bandbreite von dem Kommunikationsnetz zur Verfügung gestellt werden kann.

Diese Vorgehensweise wird so lange durchgeführt, bis ein Codec ermittelt wird, der sowohl die jeweils aktuelle Kombinationsdienstgüteklasse gewährleistet als auch einen Bandbreitenbedarf aufweist, der von dem Kommunikationsnetz, im Rahmen der Kommunikationsverbindung tatsächlich zur Verfügung gestellt werden kann.

Ist ein solcher Codec ermittelt worden, so wird der Codec, das heißt die Parameter, die das Übertragungsverhalten des Codecs beschreiben, gespeichert und die Übertragungsparameter werden einer Einheit der Transportschicht, die Daten gemäß dem TCP codieren, zugeführt.

Ist jedoch keine Übertragung von Sprachdaten über das Kommunikationsnetz möglich, so wird geprüft, ob die Dienstgütevariable den Wert 5 aufweist, das heißt ob Sprachdaten überhaupt übertragen werden sollen.
- Ist dies der Fall, so werden die Übertragungsparameter entsprechend der Kombinationsdienstgüteklasse 5 als neue, aktuelle Werte, gespeichert.
- Ist dies nicht der Fall, so werden als neue Übertragungsparameter die Werte, die der Kombinationsdienstgüteklasse 6 zugeordnet sind, gespeichert.

Zusammenfassend kann der Zyklus des Verfahrens gemäß diesem Ausführungsbeispiel in drei Phasen unterteilt werden, die anschaulich im weiteren beschrieben werden.

In einer ersten Phase wird jeder verfügbare Codec geprüft, ob er auf Grund der aktuell verfügbaren Bandbreite, überhaupt zur Übertragung der gewünschten Daten eingesetzt werden kann.

Ist dies der Fall, wird für diesen Codec in Abhängigkeit der konfligierenden Parameter Delay und zur Verfügung stehende Bandbreite ein optimaler LFP-Parameterwert (LFP: Local Frames per Packet) ermittelt. In dieser ersten Phase wird somit eine Menge geeigneter, optimal parametrierter Codecs für die Übertragung der ersten Daten, in Form von Paaren (Codec, LFP) ermittelt.

In einer zweiten Phase werden jedes in der ersten Phase als geeignet ermitteltes Paar (Codec, LFP) daraufhin überprüft, welche Qualität zweiter Daten es maximal zulässt. Die Qualität zweiter Daten wird quantifiziert in Form sogenannter Multimediakonversions-Parameter.

Es wird also ermittelt, welche Qualitätsgrade an Farbigkeit, Granularität und Bildgröße für ein gegebenes Paar (Codec, LFP) gemäß der aktuellen Gegebenheiten (verfügbare Bandbreite, Benutzerprofil, ausgehandelte Kommunikationssitzungs-Parameter, etc) sinnvoll sind und zur Verfügung gestellt werden können.

Diese Werte werden zusammengefasst in einem MMC-Vektor. Als Resultat der zweiten Phase erhält man somit eine Menge von geeigneten Tripeln (Codec, LFP, mmc_vector).

Dabei bezeichnet der Vektor mmc_vector einen Vektor von QoS-Parametern. Er stellt einen für die Übertragung optimalen Punkt in dem von den Dimensionen Farbigkeit, Granularität, Bildgröße, etc aufgespannten Raum von Übertragungsgüteklassen für die zweiten Daten dar.

In einer dritten Phase wird dann anhand der aktuellen QoS-Messwerte und QoS-Voreinstellungen aus der Menge aller in der zweiten Phase ermittelten Tripel der relativ beste Parametersatz (Codec, LFP, mmc_vector) ermittelt.

Der auf diese Weise ermittelte relativ beste Parametersatz wird im laufenden Übertragungsbetrieb umgesetzt, d.h. verwendet und der nächste Zyklus von kann beginnen.

Im weiteren ist das Verfahren zur Auswahl der Kombinationsdienstgüteklasse in Form eines Pseudocodes, der sich der Syntax der Programmiersprache C++ anlehnt, dargestellt:

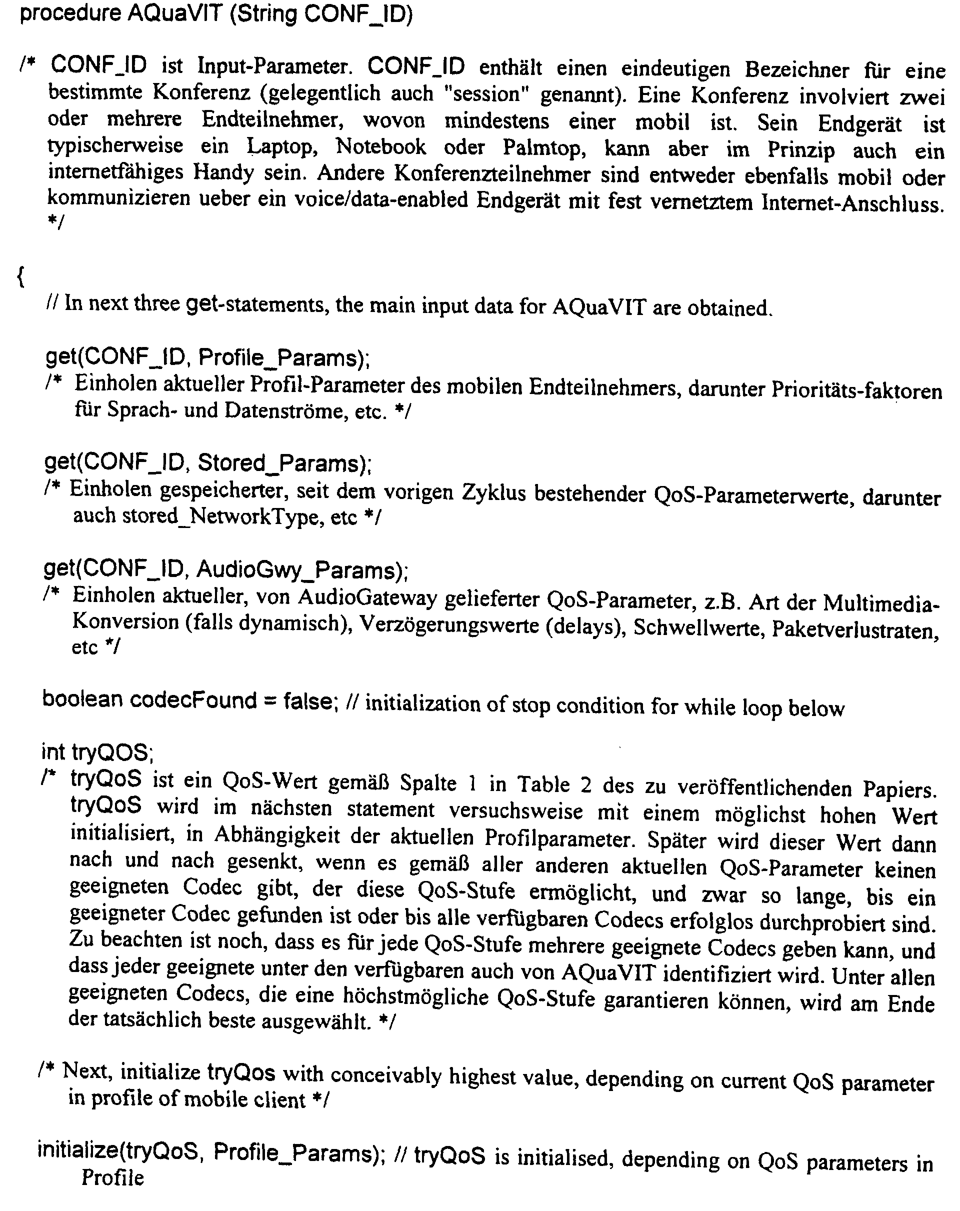

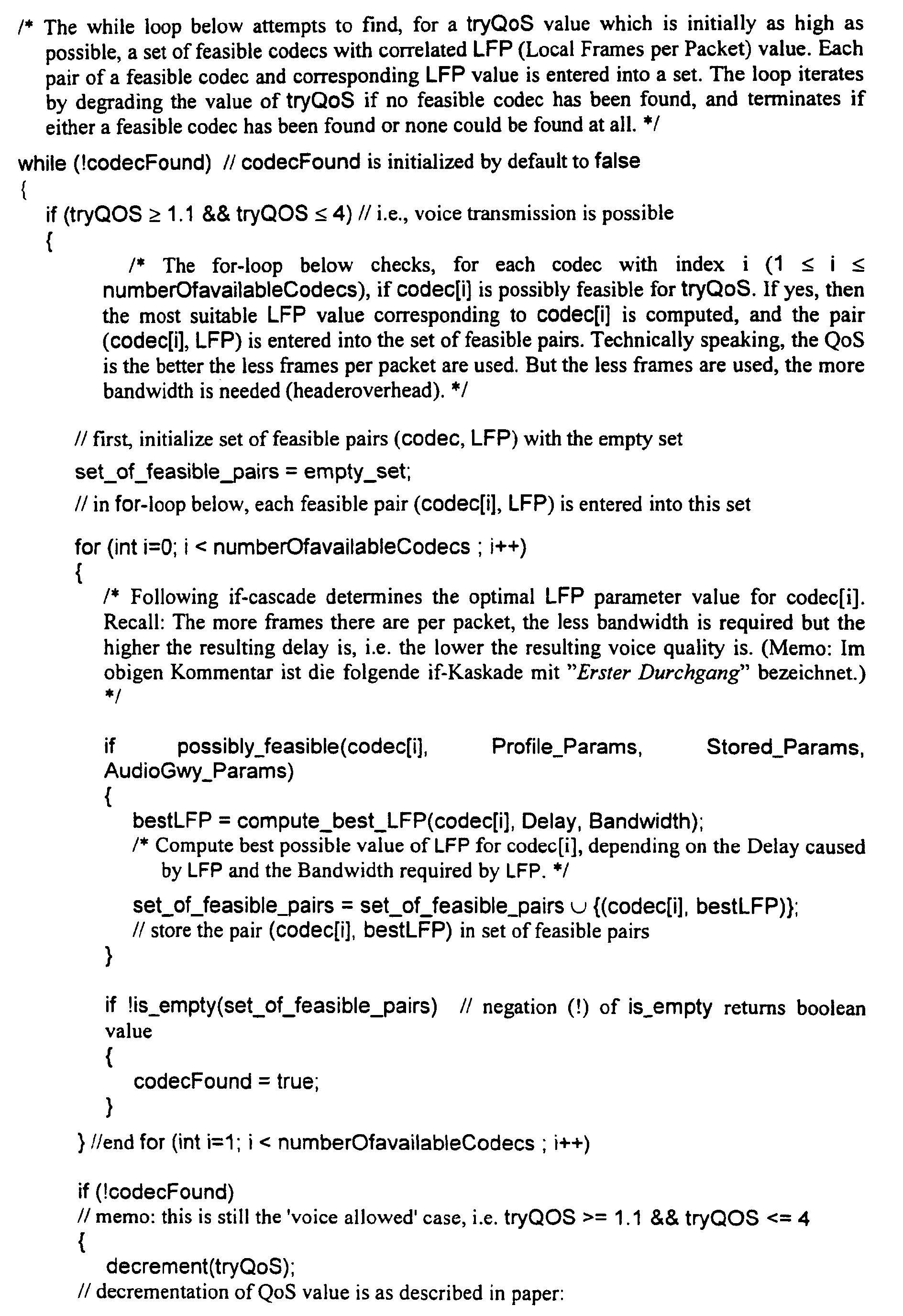

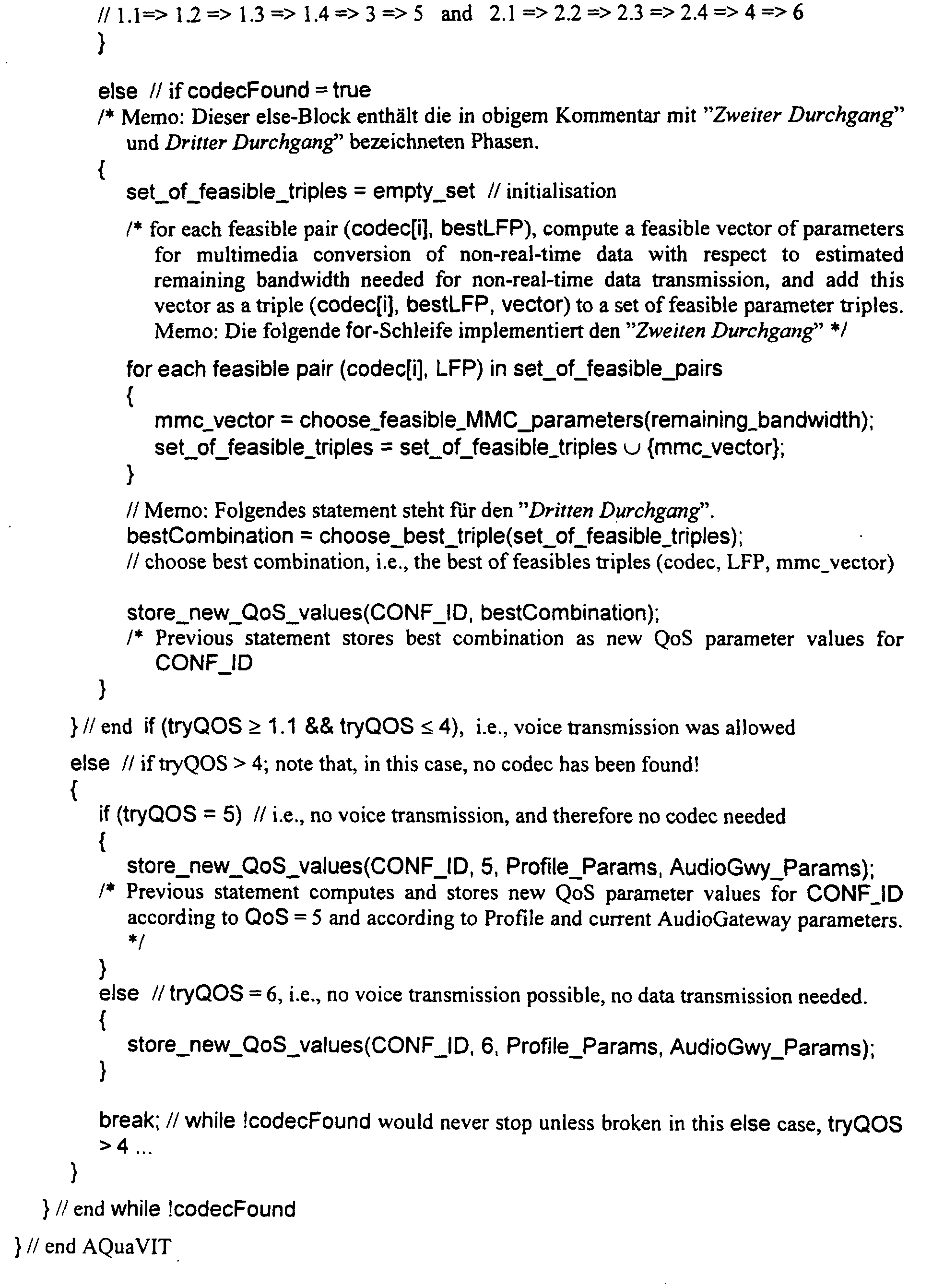

In diesem Dokument sind folgende Dokumente zitiert:
**[**1**]** A.S. Tanenbaum, Computer-Netzwerke, Wolfram's Fachverlag, 2. Auflage, ISBN 3-925328-79-3, S.17 - 32, 1992
**[**2**]** IETF working group, PSTN and Internet Internetworking (pint), erhältlich im Internet am 2.April 2000 unter der URL-Adresse:
   http://www.ietf.org/html.charters/pint-charter.html
**[**3**]** M. Krautgärtner, H. Decker, et al, Design of V/D-API and Architecture of the VE-MASE, CEC Deliverable Number AC343/ Siemens / WP2 / DS / P / 02 / a1, Project Number AC343, November 1998
**[**4**]** ETSI TIPHON, Telecommunications and Internet Protocol Harmonization Over Networks, General Aspects of Quality of Service (QoS), TR 101 329 V2.1.1 (1999-06), Juni 1999
**[**5**]** S.N. Bhatti, G. Knight "Enabling QoS Adaptations for Internet Applications, Journal of Computer Networks, Vol. 31, No. 7, S. 669-692, März 1999
**[**6**]** H. Decker, M. Krautgärtner, C. Ong, M. Wallbaum, Quality of Service Management in an Integrated Mobile Voice/Data-Enabled Service Architecture, Proceedings of the 4^{th} ACTS Mobile Communication Summit, June 8-11, 1999, Sorrento, Italy
**[**7**]** M. Handley et al, SIP: Session Initiation Protocol, IETF Request for Comments 2543, März 1999
[8] WAP: Wireless Telephony Application Specification, erhältlich im Internet am 2.April 2000 unter der URL-Adresse:
   http://www1.wapforum.org/tech/documents/SPEC-WTA-19991108.pdf
[9] H. Decker, M. Krautgärtner, Flexible Quality-of-Service Technology for Supporting Voice/Data-Integrated Nomadic Networking, in B. Chistensen-Dalsgaard, W. Donelly, M. Griffith (eds), Flexible Working -- New Network Technologies, IOS Press / Ohmsha, 1999, ISBN 1 58603 028 0 (IOS Press), ISBN 4 274 90322 2 C3050 (Ohmsha), Library of Congress Card Number 99-67675

## Patentansprüche

1. Verfahren zum Übertragen von ersten Daten mit Echtzeitanforderung und zweiten Daten ohne Echtzeitanforderung, wobei zur Übertragung der ersten Daten eine Mehrzahl von ersten Dienstgüteklassen in der Anwendungsschicht vorgesehen ist, und wobei zur Übertragung der zweiten Daten eine Mehrzahl von zweiten Dienstgüteklassen in der Anwendungsschicht vorgesehen ist,
• bei dem eine der aus den ersten Dienstgüteklassen und den zweiten Dienstgüteklassen gebildeten Kombinationsdienstgüteklassen in der Anwendungsschicht ausgewählt wird, wobei jeder Kombinationsdienstgüteklasse Übertragungsparameter zugeordnet sind, mit denen angegeben wird, mittels welcher Parameter die Übertragung der ersten Daten und der zweiten Daten erfolgen soll, und
• bei dem die ersten Daten und die zweiten Daten sowie die Übertragungsparameter der ausgewählten Kombinationsdienstgüteklasse einer Einheit der Transportschicht zugeführt werden, mittels der die ersten Daten und die zweiten Daten unter Berücksichtigung der Übertragungsparameter übertragen werden.

2. Verfahren nach Anspruch 1,
bei dem die ersten Daten Sprachdaten enthalten.

3. Verfahren nach Anspruch 1 oder 2,
bei dem die zweiten Daten zumindest eine der folgenden Daten enthält:
• textuelle Daten, und/oder
• Videodaten, und/oder
• Bilddaten.

4. Verfahren nach einem der Ansprüche 1 bis 3,
bei dem den ersten Dienstgüteklassen jeweils eine erste Priorität und den zweiten Dienstgüteklassen eine zweite Priorität zugeordnet ist, mit der angegeben ist, mit welcher Priorität die ersten Daten bzw. die zweiten Daten übertragen werden sollen.

5. Verfahren nach einem der Ansprüche 1 bis 4,
bei dem die Kombinationsdienstgüteklassen abhängig von den ersten Prioritäten und den zweiten Prioritäten gebildet werden.

6. Verfahren nach einem der Ansprüche 1 bis 5,
bei dem die Auswahl der Kombinationsdienstgüteklasse auf folgende Weise erfolgt:
a) es wird die Kombinationsdienstgüteklasse ausgewählt, die die erste Dienstgüteklasse mit höchster erster Priorität und die zweite Dienstgüteklasse mit höchster zweiter Priorität aufweist,
b) es wird geprüft, ob ein zu verwendender Coder die ersten Daten und die zweiten Daten gemäß den Übertragungsparametern der jeweiligen Kombinationsdienstgüteklasse übertragen kann,
c) ist dies der Fall, so wird die Kombinationsdienstgüteklasse ausgewählt,
d) wenn dies nicht der Fall ist, so wird eine weitere Kombinationsdienstgüteklasse ausgewählt derart, dass jeweils die Kombinationsdienstgüteklasse mit reduzierter zweiter Priorität ausgewählt wird, und
e) die Schritte b) und d) werden iterativ solange durchgeführt, bis der Coder die ersten Daten und die zweiten Daten gemäß den Übertragungsparametern der jeweiligen Kombinationsdienstgüteklasse übertragen kann.

7. Verfahren nach einem der Ansprüche 1 bis 6,
in der Einheit der Transportschicht werden die ersten und die zweiten Daten als ein Datenstrom mit vorgebbarer Transportschicht-Dienstgüteklasse codiert und übertragen.

8. Kommunikationsvorrichtung zum Übertragen von ersten Daten mit Echtzeitanforderung und zweiten Daten ohne Echtzeitanforderung, wobei zur Übertragung der ersten Daten eine Mehrzahl von ersten Dienstgüteklassen in der Anwendungsschicht vorgesehen ist, und wobei zur Übertragung der zweiten Daten eine Mehrzahl von zweiten Dienstgüteklassen in der Anwendungsschicht vorgesehen ist,
mit einem Prozessor, der derart eingerichtet ist, dass folgende Schritte durchführbar sind:
• eine der aus den ersten Dienstgüteklassen und den zweiten Dienstgüteklassen gebildeten Kombinationsdienstgüteklassen in der Anwendungsschicht wird ausgewählt, wobei jeder Kombinationsdienstgüteklasse Übertragungsparameter zugeordnet sind, mit denen angegeben wird, mittels welcher Parameter die Übertragung der ersten Daten und der zweiten Daten erfolgen soll, und
• die ersten Daten und die zweiten Daten sowie die Übertragungsparameter der ausgewählten Kombinationsdienstgüteklasse werden einer Einheit der Transportschicht zugeführt, mittels der die ersten Daten und die zweiten Daten unter Berücksichtigung der Übertragungsparameter übertragen werden.

9. Kommunikationsvorrichtung nach Anspruch 8,
ausgestaltet als mobile Kommunikationsvorrichtung.

10. Kommunikationssystem mit einer mobilen ersten Kommunikationsvorrichtung nach Anspruch 8 und einer zweiten Kommunikationsvorrichtung,
bei dem die ersten Daten und die zweiten Daten von der ersten Kommunikationsvorrichtung zu der zweiten Kommunikationsvorrichtung übertragen werden können.
